# EUROPEAN PATENT SPECIFICATION

(11) **EP 3 810 952 B1**
(45) Date of publication and mention of the grant of the patent: **07.09.2022**
(21) Application number: 19734908.7
(22) Date of filing: 06.06.2019
(51) Int. Cl.: F16D 65/097, F16D 55/228

(54) **SPRING FOR FRICTION PADS IN A DISC BRAKE CALIPER**
FEDER FÜR REIBBELÄGE IN EINEM SCHEIBENBREMSSATTEL
RESSORT POUR PLAQUETTES DE FREIN DANS UN ÉTRIER DE FREIN À DISQUE

(30) Priority: 20.06.2018 IT 201800006506
(43) Date of publication of application: 28.04.2021
(73) Proprietor: BREMBO S.p.A., 24035 Curno (BERGAMO) (IT)
(72) Inventor: SCOTTI, Fabio, 24035 Curno (BERGAMO) (IT); MECOCCI, Andrea, 24035 Curno (BERGAMO) (IT); MAMBRETTI, Mauro, 24035 Curno (BERGAMO) (IT)
(74) Representative: Leihkauf, Steffen Falk
(86) International application number: PCT/IB2019/054722
(87) International publication number: WO 2019/243933

(56) References cited:
- WO-A1-2017/085619
- US-A1- 2014 367 208
- US-B2- 9 862 362

## Description

The present invention relates to a spring for elastically retaining and positioning the pads in a disc brake caliper, as well as to a disc brake equipped with such a spring.

Cross-shaped expansion springs for fixed caliper disc brakes provided with a longitudinal piece, the ends of which abut e.g. against two support pins which support the pads, and a cross piece, the ends of which abut against the upper edges of the pads in order to retain the pads elastically in a "lowered" position, are known. By virtue of an inclined configuration of the lower surface of the cross piece, expansion springs bias the pads away from one another to ensure a separation of the pads from the brake disc after each braking.

The ends of the longitudinal piece of the known expansion springs usually engage both support pins from underneath and the cross piece of the expansion springs presses from above in springing manner on the support plates of the pads.

The known expansion springs are thus used to obtain a three-fold action:
- to reduce the vibrations of the pads,
- to distance the brake pads from the brake disc in order to reduce or eliminate a residual braking torque due to undesired contacts between the brake pads and the brake disc with the brake deactivated,
- to obtain a uniform wear of the friction linings of the pads.

The expansion springs of the prior art abut on the pads with an application angle of the elastic force of less than 15° with respect to the plane of the pad and consequently transmit a high radial elastic force and a much lower elastic axial force to the pad. The axial elastic force moves the pads away from each other and from the brake disc along a planned axial sliding direction. In contrast with this, the radial elastic force generates a frictional resistance which opposes the axial thrust of the spring and thus the mutual distancing of the pads in the resting interfaces between the pads and the caliper, e.g. in resting interfaces between a support pin and a corresponding pad hole.

With the expansion springs of the prior art, the axial elastic force is insufficient to overcome the frictional resistance generated by the elastic radial elastic force in every operating condition of the brake in complete and reliable manner.

An incomplete detachment between brake pads and disc thus often occurs with the brake deactivated, resulting in:
- undesired residual braking moments,
- unplanned pad position and orientation, [0013] - non-uniform pad wear.

Furthermore, the axial elastic force applied by the expansion springs of the prior art varies according to the wear state (and therefore according to the axial position) of the friction pad.

Consequently, the application conditions of the elastic forces and thus the constraint conditions of the pads are uncertain, difficult to predict with precision and variable over time. The balance of the moments acting on the friction pad is undesirably sensitive to (and influenced by) frictions and by geometric variability.

It follows that the distancing function of the pads from the brake disc is not ensured during the entire life cycle of the pad which gradually wears. US9862362B2 describes a spring for friction pads associable with a caliper of a disk brake, representing a closest state of the art for the present invention.

It is therefore the object of the present invention to provide an improved spring for pads and disc brake having such features as to reduce the residual braking torque with the brake deactivated and to improve and make more uniform the distancing function of the pads from the brake disc also in the presence of pad wear and during their entire life cycle.

In the scope of the general object of the invention, further objects relate to a reduction of the sensitivity (or in other words: an improvement of the robustness) of the elastic constraint system of the friction pads and in the balance of the moments acting on the friction pads, to geometric tolerances, friction effects and variations of the supporting conditions between the pads and the caliper and between the expansion spring and the pad.

These and other objects are achieved by a spring for pads according to claim 1 and by a disc brake according to claim 6. The dependent claims relate to advantageous and preferred embodiments.

In order to better understand the invention and appreciate its advantages, some nonlimiting examples of embodiments will be described below with reference to the accompanying figures, in which:

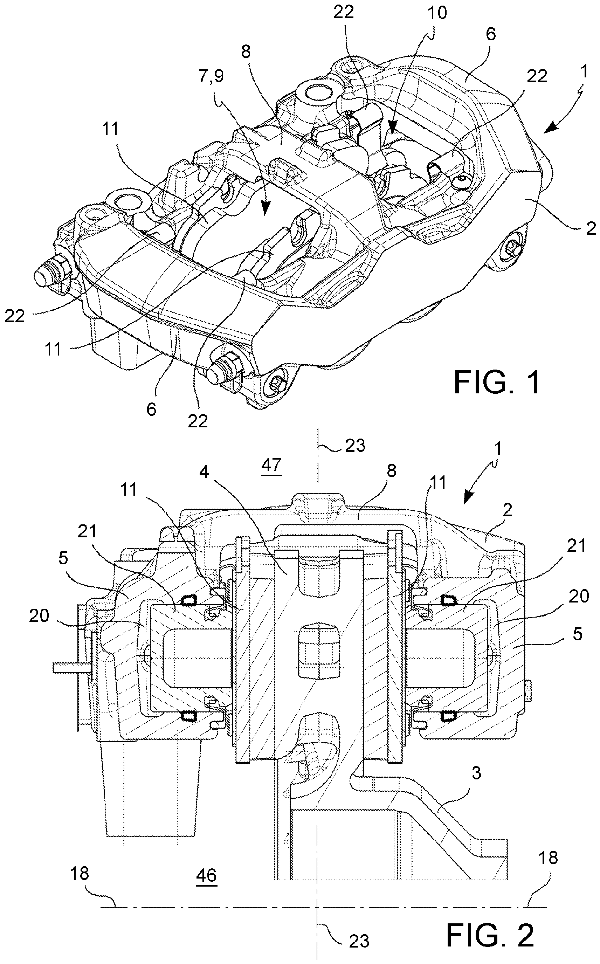

figure 1 is a perspective view of a disc brake according to an embodiment;
figure 2 is a radial section view (with respect to a rotation axis of a disc brake) of the disc brake in figure 1,
figure 3 is a radial section view of the disc brake in deactivated configuration (with the brake disc removed for greater clarity),
figure 4 shows the disc brake in figure 3 in an activated configuration;
figure 5 is a top view of the disc brake in figure 1,
figure 6 is a bottom view of the disc brake in figure 1,
figures 7 and 8 are axial and perspective section views of the disc brake according to an embodiment,
figures 9, 10, 11 are views of a spring for friction pad according to an embodiment,
figures 12 and 13 show a friction pad of the disc brake according to an embodiment.

With reference to the figures, a disc brake, in particular for use on motor vehicles, is globally indicated by reference numeral 1. In the specific case, it is a disc brake of the fixed caliper type. However, the invention also applies to so-called floating calipers and to brakes with floating caliper.

The disc brake 1 comprises a caliper 2 and a brake disc 3. The caliper 2 can be fixed, e.g. by means of fixing screws, to a vehicle suspension, while the brake disc 3, provided with an annular braking band 4, can be connected to the wheel hub of the vehicle (not shown).

The caliper 2 comprises two side walls 5 which are arranged on both sides of the brake disc 3 and connected to each other by means of connecting elements which extend straddling the braking band 4 of the brake disc 3. Advantageously, the caliper 2 comprises two end bridges 6 delimiting a central opening 7, as well as at least or exactly one linkage 8 arranged in the central opening 7 and which structurally connects the two side walls 5 so as to limit the deformation of the caliper 2 during braking. Preferably, the linkage 8 is arranged approximately at the center of the central opening 7 so as to divide it into two half-openings 9, 10 of substantially equal circumferential extension (with reference to the rotation axis 18 of the brake disc 3).

At least two pads 11 having a support plate 12, e.g. made of steel, and a friction material lining 13, are each arranged on one side of the brake disc 3 at the braking band 4 and housed in appropriate seats 14 of the caliper 2 and supported by at least one, preferably two support pins 15. The size and mechanical strength of the support pins 15 is sufficient to allow the pads 11 to hang from or rest on such support pins 15, e.g. by means of a support hole or slot 16 formed in the support plate 12, preferably in a side end portion 17 or in two opposite side end portions 17 of the support plate 12, preferably in a radially inner half (with respect to the rotation axis 18 of the brake disc 3) and/or at or near a lower (i.e. radially inner) edge 19 of the support plate 12, in order to prevent radial displacements (related to the rotation axis 18 of the brake disc 3) of the friction pads 11. It is worth noting that the support pins 15 for the friction pads 11 generally do not contribute to the overall rigidity of the caliper 2.

The friction pads 11 are movable in axial direction perpendicular to the plane 23 of the brake disc 3 along the support pins 15 and can be biased by thrust means, e.g. such as one or more hydraulic cylinder-piston units 20, 21 arranged in the caliper 2, so as to clamp, via the friction lining 13, a sector of the braking band 4, the surface and shape of which corresponds to those of the friction linings 13.

The disc brake 1 further comprises at least one pad spring 22 which applies an elastic preload onto the pads 11 to keep the friction pads 11 distanced from the brake disc 3 with the brake deactivated. The same one or more springs 22 or one or more additional springs (not shown) may perform the further function of holding the friction pads 11 elastically in the seats 14, thereby reducing the onset of vibrations and noise due to movements of the pads with respect to the caliper 2 with the brake deactivated.

Generally, the disc brake 1 may comprise four springs 22, respectively two associated with each friction pad 11.

The spring 22 comprises an elongated plate 27 bent so as to form a fixing stretch 24, a resting stretch 25, opposite to the fixing stretch 24, and an arch-shaped return stretch 26 formed between the fixing stretch 24 and the resting stretch 25, wherein the return stretch 26 extends from a narrowing region 29, in which the fixing stretch 24 and the resting stretch 25 are locally approximated to each other, in form of a widened loop with respect to the narrowing region 29 until reaching an upper apical region 28 of the spring 22.

The fixing stretch 24 forms a fixing seat (30) for a clamping fixation of the spring 22 to a corresponding fixing portion 31 formed by the caliper 2.

The resting stretch 25 forms a plate-shaped contact portion 32, preferably flat, for a free abutment (with possibility of slipping) of the spring 22 against a corresponding contact surface 33 formed at the support plate 12 of the friction pad 11, and an intermediate portion 34 extending between the narrowing region 29 and the contact portion 32, in which the contact portion 32 is bent with respect to the intermediate portion 34 so that, with the spring 22 not deformed:
- the plate-shaped intermediate portion 34 extends, starting from the narrowing region 29, in diverging manner with respect to the fixing stretch 24 with a first acute divergence angle 36 (smaller than 90°), and
- the plate-shaped contact portion 32 extends, starting from a bending edge 35 formed between the contact portion 32 and the intermediate portion 34, in diverging manner with respect to the fixing stretch 24 with a second obtuse divergence angle 37 (greater than 90°),
- the bending edge 35 protrudes in the same extension direction as the fixing portion 31.

The particular configuration of the spring 22 allows a fixing thereof by clamping, e.g. by means of a fixing screw 38 inserted in the fixing seat 30, and a free support (with possibility of sliding and orientation) by means of the plate-shaped contact portion 32, as well as an elastic widening of the distance between the fixing stretch 24 and the resting portion 25, against the elastic resistance generated by the elastic deformation of the large loop formed by the return portion 26. By virtue of the widening of the loop of the return stretch 26 with respect to the narrowing region 29, the return stretch 26 makes available a sufficiently intense elastic force towards the fixing stretch 24 and resting stretch 25 so as to effectively push the friction pads 11 away from the brake disc 3.

According to an aspect of the invention, the spring 22 is fixed in the disc brake 1 with:
- the return stretch 26 directed towards an upper (or radially outer) side 47 of the caliper 2 and extends at least partially, possibly completely, above (or in other words, more radially outward with respect to) the side end portion 17 of the friction pad, and
- the resting stretch 25 extending protruding towards a lower side 46 of the caliper 2, i.e. radially inwards, and
- the fixing stretch 24 extending in a transverse direction, e.g. orthogonal to the plane 23 of the brake disc 3 (or, in other words, in a direction parallel to the rotation axis 18 of the brake disc 3).

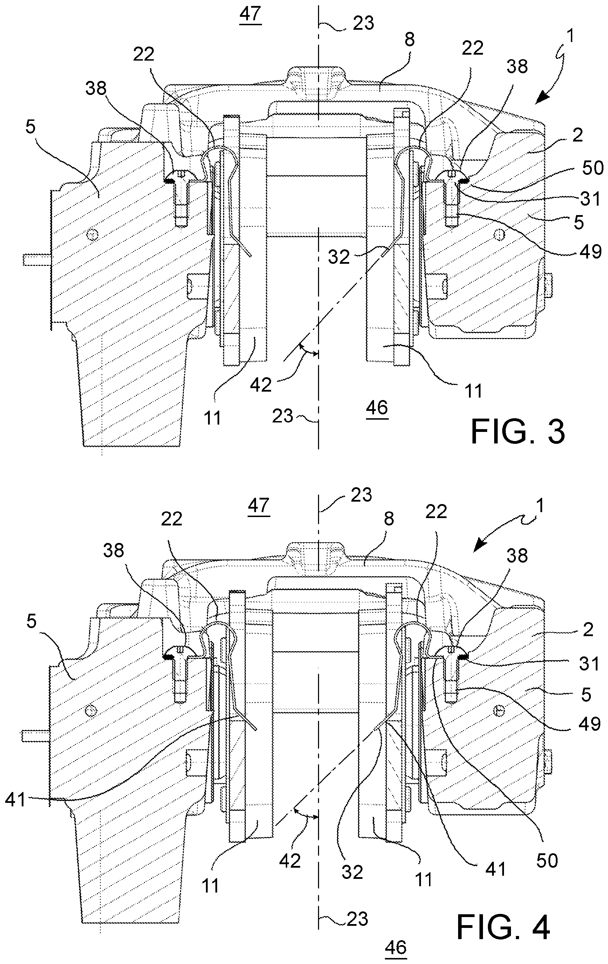

With further advantage, in assembled configuration, the intermediate portion 34 extends in a direction nearly parallel to the disc plane 23 (brake deactivated and pads distanced from the brake disc) and may reach an inclination angle with respect to the disc plane 23 lower than 25°, preferably lower than 15°, while the contact portion 32 extends with an inclination angle with respect to disc plane 23, lower than 55°, preferably lower than 50°, still more preferably lower than or equal to 45° (figures 3, 4).

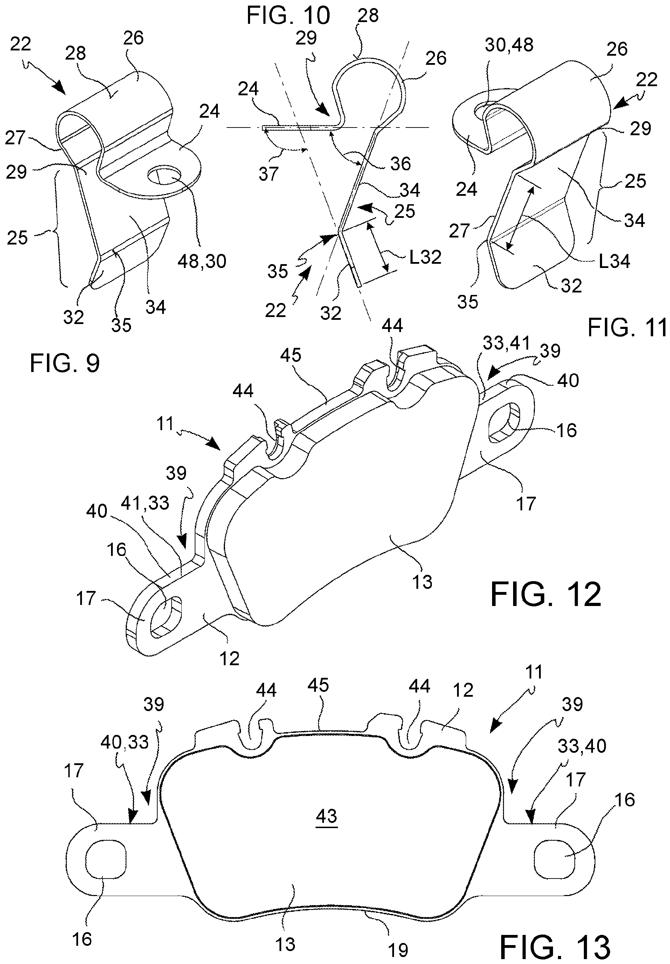

Advantageously, the contact portion 32 has a length L32 smaller than a length L34 of the intermediate portion 34 (figures 10, 11). Preferably the length L32 of the contact portion 32 is in the range from 0.4 * L34 to 0.6 * L34, preferably about 0.5 * L34.

For preparing the space necessary for positioning the springs 22, the friction pads 11 form two side end recesses 39 above the aforesaid side end portions 17.

The side end portions 17 extend in a lower, i.e. radially inner, zone, of the friction pad 11, and an upper edge 40 of the side end portions 17 (which forms the aforesaid contact surface 33) is positioned in a radially central region having radial extension of one third of the total radial extension of the friction pad 11. Preferably, the upper edge 40 of the side end portions 17 extends to about half of the total radial extension of the friction pad 11 (figure 13).

Advantageously, the fixing stretch 24 of the spring 22 is locked to the side wall 5 of the caliper 2 on a rear side of the friction pad 11 facing away from the brake disc 3 and the contact portion 32 of the spring 22 abuts from above (i.e. from a radially outer side in radially inner direction) against the upper edge 40 of the side end portion 17 of the support plate 12 of the friction pad 11 (figures 3, 4, 7, 8).

More precisely, the contact portion 32 of the spring 11 extends in inclined manner from above the side end portion 17 axially inwards (towards the brake disc 3) and radially downwards or towards the radially inner side 46 of the caliper 2 and rests in free contact and with possibility of sliding against an axially inner edge 41 of the upper edge 40.

The contact portion 32 applies on the friction pad 11 an axial elastic force in distancing direction from the brake disc 3 and a radial elastic force (of much lower intensity) towards the radially inner side 46 of the caliper 2. Indeed, the inclination angle 42 (figures 3, 4) of the contact portion 32 with respect to the plane 23 of the brake disc 3 is lower than 60°, preferably lower than or equal to 50°, e.g. approximately 45°, so as to transmit mainly an axial force (distancing the pads 11 from the brake disc) and secondarily a radial force (pad anti-vibration resting on the support pins 15). The fixing stretch 24 of the spring 22 applies on the side wall 5 of the caliper 2 an axial elastic force in approaching direction to the brake disc 3 and a radial elastic force (of lesser entity) towards the upper (radially outer) side 47 (figures 3, 4).

According to an embodiment, the fixing portions 31 for the springs 22 are radially formed more outside the support pins 15 and the contact surfaces 33 of the friction pads 11. Advantageously, the contact portions 32 and the contact surfaces 33 are positioned at a distance from a respective support pin 15 less than twice the diameter of the support pin 15 (at the support hole 16), preferably lower than or equal to the diameter of the support pin 15 (at the support hole 16).

With further advantage, the contact surfaces 33 and the contact portions 32 are misaligned with respect to the support holes 16 and displaced with respect to the latter towards a circumferentially central area 43 of the friction pad 11.

Advantageously, both the support holes 16 of the friction pads 11 and the contact surfaces 33 engaged by the respective contact portions 32 are formed in lower end appendixes, i.e. radially inner appendixes, and/or side appendixes 17, i.e. circumferentially more outward, of the support plate 12 inserted on the support pins 15.

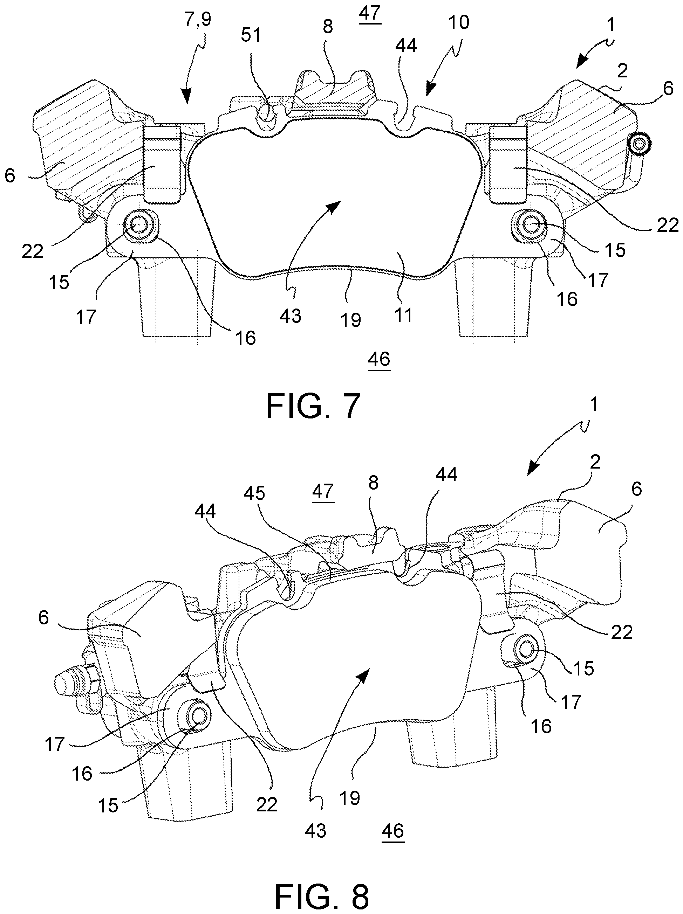

In the embodiment shown in figure 7, the lower and side end appendix 17 has a radial extension either equal to or less than two thirds, preferably either equal to or less than half of the total radial extension (height) of the friction pad 11, as well as a circumferential extension either equal to or less than one fourth, preferably either equal to or less than one fifth, of the total circumferential extension of the pad 11.

According to a further embodiment (figure 7), the support plate 12 and possibly also the friction lining 13 of the friction pad 11 can form one or more upper cavities 44 formed in a radially outer edge 45 of the pad 11 to allow fixing of one or more sensors for signaling the friction material wear.

According to an embodiment (figure 9), the fixing seat 30 may comprise a through hole 48 formed in the fixing stretch 24 and adapted to receive a fixing screw 38 which can be screwed into a threaded hole 49 of the fixing portion 31 (figure 3).

The distance of the through hole 48 from the narrowing region 29 (in which the return stretch 26 begins) is two times smaller than the diameter of the through hole 48, preferably smaller than or equal to 1.5 times the diameter of the through hole 48. This ensures, with the spring 22 mounted at the caliper 2, a high rigidity of the fixing stretch 24 and a concentration of the elastic deformations of the spring 22 mainly in the return stretch 26.

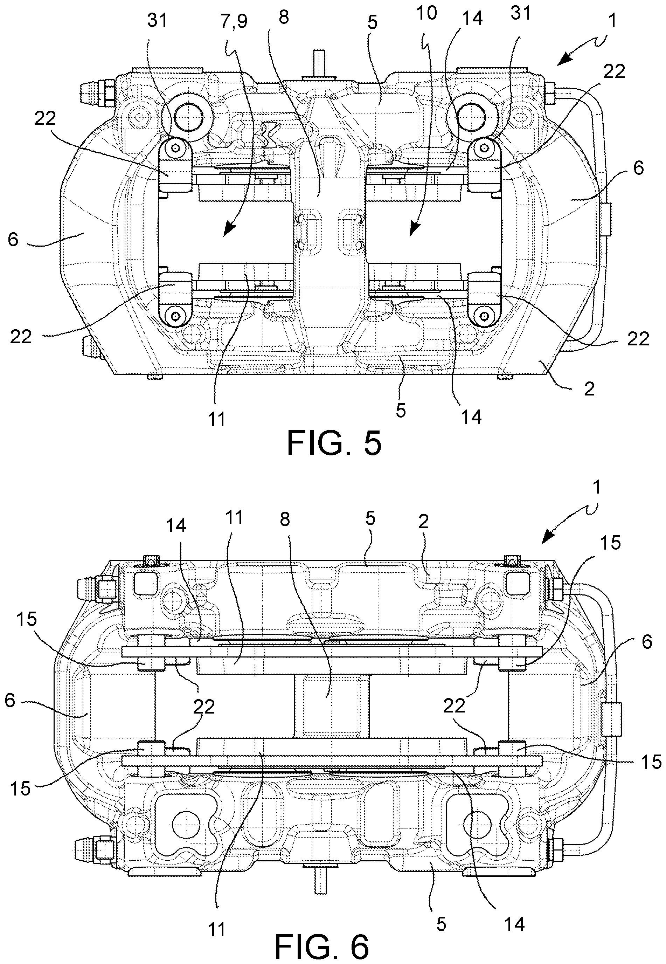

According to an embodiment (figures 4, 5), the threaded hole 49 is formed in a resting niece 50 which accommodates the fixing stretch 24 of the spring 22 so as to prevent rotation of the spring 22 about the fixing screw 38. The clamping engagement between the resting niche 50, the fixing stretch 24 and a head of the fixing screw 38 prevent further rotations and translations of the fixing stretch 24 with respect to the caliper 2.

The fixing portions 31 are formed at the central opening 7 or at the half-openings 9, 10 and the fixing stretch 24 of the spring 22 rests in the resting niche 50 from the radially outer side 47 of the caliper 2 toward the radially inner side 46. The fixing screw 38 can also be inserted into the threaded hole 49 and accessed and screwed from the radially outer side 47 through said half-openings 9, 10 or through said central opening 7.

Advantageously, the spring 22 is formed in one piece, preferably of plate-shaped or strip-shaped metallic material contoured so as to display only curvatures about axes substantially parallel to one another and substantially parallel to the plane of the brake disc 3, with the spring 22 mounted in the caliper 2.

From the description provided, the person skilled in the art will appreciate that the spring 22 for friction pad 11 and the disc brake 1 according to the invention keeps the pads detached from the brake disc when the brake is deactivated, thereby reducing the residual braking torque with the brake deactivated.

Furthermore, the disc brake 1 and the spring 22 according to the invention are less sensitive to geometric tolerances, to the effects of friction and to variations in the support conditions between the pads 11 and the caliper 2 and between the spring 22 and the pad 11. As a result, the springs 22 provide a more intense axial elastic bias, which is more uniform even in the presence of a progressive wear of the friction lining 13 of the pads 11.

Furthermore, the spring 22 according to the invention can be easily fitted onto the caliper and the friction pad and its position does not violate the space of other functional components of the brake, thereby allowing an optimized placement and sizing targeted for each of the functional components.

Obviously, a person skilled in art may make further changes and variants to the spring 22 for pads 11 and to the disc brake 1 according to the present invention all without departing from the scope of protection of the invention, as defined in the following claims.

## Claims

1. A spring (22) for friction pads (11) associable with a caliper (2) of a disc brake (1) for elastically biasing the friction pads (11) away from a brake disc (3) of the disc brake (1), said spring (22) comprising an elongated plate (27) bent so as to form:
- a fixing stretch (24),
- a resting stretch (25), opposite to the fixing stretch (24), and
- a return stretch (26) formed between the fixing stretch (24) and the resting stretch (25), wherein the return stretch (26) extends from a narrowing region (29), in which the fixing stretch (24) and the resting stretch (25) are locally approximated to each other at least partially, to an upper apical region (28) of the spring (22),
**characterised in that**
the fixing stretch (24) forms a fixing seat (30) for a clamping fixation of the spring (22) to a corresponding fixing portion (31) of the caliper (2),
wherein the resting stretch (25) forms:
- a plate-shaped contact portion (32) for freely abutting the spring (22) against a corresponding contact surface (33) of the friction pad (11), and
- a plate-shaped intermediate portion (34), extending between the narrowing region (29) and the contact portion (32),
- a bending edge (35) formed between the contact portion (32) and the intermediate portion (34),
wherein the contact portion (32) is bent with respect to the intermediate portion (34) so that, when the spring (22) is not deformed:
- the intermediate portion (34) extends, starting from the narrowing region (29), in a diverging manner with respect to the fixing stretch (24) with a first divergence angle (36), and
- the plate-shaped contact portion (32) extends, starting from the bending edge (35), in a diverging manner with respect to the fixing stretch (24) with a second divergence angle (37),
- said first divergence angle (36) and second divergence angle (37) being of different size, and
- the bending edge (35) protrudes in the same extension direction as the fixing portion (31).

2. A spring (22) according to claim 1, wherein the return stretch (26) extends from the narrowing region (29) in the form of a loop widened with respect to the narrowing region (29) and the contact portion (32) has a shorter length (L32) than a length (L34) of the intermediate portion (34).

3. A spring (22) according to claim 1, wherein the intermediate portion (34) extends, from the narrowing region (29), in a diverging manner with respect to the fixing stretch (24), wherein said first divergence angle (36) has a smaller width than said second divergence angle (37).

4. A spring (22) according to claim 1, wherein the intermediate portion (34) extends, starting from the narrowing region (29), in a diverging manner with respect to the fixing stretch (24) with a first acute divergence angle (36), and
- the plate-shaped contact portion (32) extends, starting from the bending edge (35), in a diverging manner with respect to the fixing stretch (24) with a second obtuse divergence angle (37).

5. A spring (22) according to any one of the preceding claims, wherein the fixing seat (30) comprises a through hole (48) adapted to receive a fixing screw (38) which can be screwed into a threaded hole (49) of the fixing portion (31).

6. A disc brake (1) comprising:
- a caliper (2) with two side walls (5) arranged on both sides of a disc plane (23) and forming pad seats (14), wherein the two side walls (5) are connected to each other by end bridges (6) which delimit a central opening (7),
- a pair of friction pads (11) arranged in said pad seats (14) and having a support plate (12) bearing a friction lining (13) and forming support holes (16),
- one or more support pins (15) protruding from the side walls (5) and inserted into the support holes (16) for supporting the friction pads (11);
- one or more springs (22) according to any one of the preceding claims;
wherein the spring (22) is fixed in the disc brake (1) with:
- the return stretch (26) facing a radially outer side (47) of the caliper (2), and
- the resting stretch (25) protruding towards a radially inner side (46) of the caliper (2), and
- the fixing stretch (24) extending in a direction transverse to the plane (23) of the brake disc (3).

7. A disc brake (1) according to claim 6, wherein the friction pads (11) form two lateral end portions (17) extending in a radially inner region of the friction pad (11), said lateral end portions (17) forming an upper edge (40) positioned in a radially central region of the friction pad (11) having a radial extension which is smaller than one third of the total radial extension of the friction pad (11), wherein said contact portions (32) of the springs (22) rest against the upper edges (40) of said lateral end portions (17) of the friction pads (11).

8. A disc brake (1) according to one of claims 6 and 7, wherein the fixing stretch (24) of the spring (22) is locked to the side wall (5) on a rear side of the friction pad (11) facing away from the brake disc (3) and the contact portion (32) of the spring (22) abuts on a radially outer side in a radially inner direction and in an axially outer direction against the upper edge (40) of the lateral end portion (17) of the friction pad (11).

9. A disc brake (1) according to claim 8, wherein the contact portion (32) of the spring (11) extends in an inclined manner from above the lateral end portion (17) axially towards the brake disc (3) and radially towards the radially inner side (46) of the caliper (2) and rests in free contact and with the possibility of sliding against an axially inner edge (41) of the upper edge (40).

10. A disc brake (1) according to any one of claims 6 to 9, wherein the contact portion (32) of the spring (22) transmits to the friction pad (11) an axial force in a direction away from the brake disc (3) and the fixing stretch (24) of the spring (22) applies to the side wall (5) of the caliper (2) an axial elastic force in a direction approaching the disc brake (3)

11. A disc brake (1) according to any of the claims from 6 to 10, wherein:
- the fixing portions (31) for the springs (22) are formed radially more outside of the support pins (15) and of the contact surfaces (33) of the friction pads (11),
- the contact portions (32) of the springs (22) and the corresponding contact surfaces (33) of the friction pads (11) are positioned at a distance from a respective support pin (15) which is less than twice the diameter of the support pin (15) at the support hole (16).

12. A disc brake (1) according to claim 11, wherein the contact surfaces (33) and the contact portions (32) are misaligned and displaced with respect to the support holes (16) towards a circumferentially central zone (43) of the friction pad (11).

13. A disc brake (1) according to one of claims 11 and 12, wherein the support holes (16) are formed in said end portions (17), and said end portions (17) each have a radial extension either equal to or smaller than two thirds, or either equal to or smaller than half of the total radial extension of the friction pad (11) and a circumferential extension smaller than either one quarter or one fifth of the total circumferential extension of the friction pad (11).

14. A disc brake (1) according to one of claims 6 to 13 as dependent on claim 4, wherein the threaded hole (49) is formed in a resting niche (50) which receives the fixing stretch (24) of the spring (22) so as to prevent rotations of the spring (22) about the fixing screw (38) and wherein a clamping engagement between the resting niche (50), the fixing stretch (24) and a head of the fixing screw (38) prevent the further rotations and translations of the fixing seat (30) with respect to the caliper (2).

15. A disc brake (1) according to claim 14, wherein:
- the fixing portions (31) are formed at one or more radially outer openings (7, 9, 10) of the caliper (2),
- the fixing stretch (24) of the spring (22) rests in the resting niche (50) from the radially outer side (47) of the caliper (2) towards a radially inner side (46) thereof,
- the fixing screw (38) can be inserted into the threaded hole (49) and accessed from the radially outer side (47) through said radially outer openings (9, 10).

## Patentansprüche

1. Feder (22) für Reibbeläge (11), welche einem Sattel (2) einer Scheibenbremse (1) zuordenbar ist, um die Reibeläge (11) elastisch von einer Bremsscheibe (3) der Scheibenbremse (1) weg vorzubelasten, wobei die Feder (22) eine längliche Platte (27) umfasst, welche derart geformt ist, dass sie Folgendes bildet:
- einen Befestigungsabschnitt (24),
- einen Anlageabschnitt (25), welcher dem Befestigungsabschnitt (24) entgegengesetzt ist, und
- einen Rückstellabschnitt (26), welcher zwischen dem Befestigungsabschnitt (24) und dem Anlageabschnitt (25) gebildet ist,
wobei sich der Rückstellabschnitt (26) von einem sich verjüngenden Bereich (29), in welchem der Befestigungsabschnitt (24) und der Anlageabschnitt (25) lokal wenigstens teilweise einander angenähert sind, zu einem oberen apikalen Bereich (28) der Feder (22) erstreckt,
**dadurch gekennzeichnet, dass**
der Befestigungsabschnitt (24) einen Befestigungssitz (30) für eine Klemmbefestigung der Feder (22) an einem entsprechenden Befestigungsteil (31) des Sattels (2) bildet,
wobei der Anlageabschnitt (25) bildet:
- einen plattenförmigen Kontaktteil (32) zum freien Anliegen der Feder (22) gegen eine entsprechende Kontaktfläche (33) des Reibbelags (11), und
- einen plattenförmigen Zwischenteil (34), welcher sich zwischen dem sich verjüngender Bereich (29) und dem Kontaktteil (32) erstreckt,
- einen Biegerand (35), welcher zwischen dem Kontaktteil (32) und dem Zwischenteil (34) gebildet ist,
wobei der Kontaktteil (32) in Bezug auf den Zwischenteil (34) so gebogen ist, dass, wenn die Feder (22) nicht deformiert ist:
- sich der Zwischenteil (34), ausgehend von dem sich verjüngenden Bereich (29), in einer divergierenden Weise in Bezug auf den Befestigungsabschnitt (24) mit einem ersten Divergenzwinkel (36) erstreckt, und
- sich der plattenförmige Kontaktteil (32), ausgehend von dem Biegerand (35), in einer divergierenden Weise in Bezug auf den Befestigungsabschnitt (24) mit einem zweiten Divergenzwinkel (37) erstreckt,
- wobei der erste Divergenzwinkel (36) und der zweite Divergenzwinkel (37) von unterschiedlicher Größe sind,
und
- der Biegerand (35) in der gleichen Erstreckungsrichtung wie der Befestigungsteil (31) vorsteht.

2. Feder (22) nach Anspruch 1, wobei sich der Rückstellabschnitt (26) von dem sich verjüngenden Bereich (29) in der Form einer Schleife erstreckt, welche Bezug auf den sich verjüngenden Bereich (29) erweitert ist, und der Kontaktteil (32) eine kürzere Länge (L32) als eine Länge (L34) des Zwischenteils (34) aufweist.

3. Feder (22) nach Anspruch 1, wobei sich der Zwischenteil (34) von dem sich verjüngenden Bereich (29) in einer divergierenden Weise in Bezug auf den Befestigungsabschnitt (24) erstreckt, wobei der erste Divergenzwinkel (36) eine kleinere Weite als der zweite Divergenzwinkel (37) aufweist.

4. Feder (22) nach Anspruch 1, wobei sich der Zwischenteil (34), ausgehend von dem sich verjüngenden Bereich (29), in einer divergierenden Weise in Bezug auf den Befestigungsabschnitt (24) mit einem ersten spitzen Divergenzwinkel (36) erstreckt, und
- sich der plattenförmige Kontaktteil (32), ausgehend von dem Biegerand (35), in einer divergierenden Weise in Bezug auf den Befestigungsabschnitt (24) mit einem zweiten stumpfen Divergenzwinkel (37) erstreckt.

5. Feder (22) nach einem der vorhergehenden Ansprüche, wobei der Befestigungssitz (30) ein Durchgangsloch (48) umfasst, welches dazu eingerichtet ist, eine Befestigungsschraube (38) aufzunehmen, welche in ein mit einem Gewinde versehenes Loch (49) des Befestigungsteils (31) geschraubt sein kann.

6. Scheibenbremse (1), umfassend:
- einen Sattel (2) mit zwei Seitenwänden (5), welche an beiden Seiten einer Scheibenebene (23) angeordnet sind und Belagsitze (14) bilden, wobei die zwei Seitenwände (5) durch Endbrücken (6) miteinander verbunden sind, welche eine zentrale Öffnung (7) begrenzen,
- ein Paar von Reibbelägen (11), welche in den Belagsitzen (14) angeordnet sind und eine Halterungsplatte (12) aufweisen, welche ein Reib-Lining (13) trägt und Halterungslöcher (16) bildet,
- einen oder mehrere Halterungsstifte (15), welche von den Seitenwänden (5) vorstehen und in die Halterungslöcher (16) eingesetzt sind, um die Reibbeläge (11) zu haltern;
- eine oder mehrere Federn (22) nach einem der vorhergehenden Ansprüche; wobei die Feder (22) an der Scheibenbremse (1) befestigt ist mit:
- dem Rückstellabschnitt (26), welcher einer radial äußeren Seite (47) des Sattels (2) zugewandt ist, und
- dem Anlageabschnitt (25), welcher in Richtung einer radial inneren Seite (46) des Sattels (2) vorsteht, und
- dem Befestigungsabschnitt (24), welcher sich in einer zu der Ebene (23) der Bremsscheibe (3) transversalen Richtung erstreckt.

7. Scheibenbremse (1) nach Anspruch 6, wobei die Reibbeläge (11) zwei laterale Endteile (17) bilden, welche sich in einem radial inneren Bereich des Reibbelags (11) erstrecken, wobei die lateralen Endteile (17) einen oberen Rand (40) bilden, welcher in einem radial zentralen Bereich des Reibbelags (11) positioniert ist, welcher eine radiale Erstreckung aufweist, welche geringer als ein Drittel der gesamten radialen Erstreckung des Reibbelags (11) ist, wobei die Kontakteile (32) der Federn (22) gegen die oberen Ränder (40) der lateralen Endteile (17) der Reitbeläge (11) anliegen.

8. Scheibenbremse (1) nach einem der Ansprüche 6 und 7, wobei der Befestigungsabschnitt (24) der Feder (22) an einer hinteren Seite des Reibbelags (11), welche von der Bremsscheibe (3) abgewandt ist, mit der Seitenwand (5) verriegelt ist und der Kontaktteil (32) der Feder (22) an einer radial äußeren Seite in einer radial inneren Richtung und in einer axial äußeren Richtung gegen den oberen Rand (40) des lateralen Endteils (17) des Reibbelags (11) anliegt.

9. Scheibenbremse (1) nach Anspruch 8, wobei sich der Kontakteil (32) der Feder (11) in einer geneigten Weise von oberhalb des lateralen Endteils (17) axial in Richtung der Bremsscheibe (3) und radial in Richtung der radial inneren Seite (46) des Sattels (2) erstreckt und in freiem Kontakt und mit der Möglichkeit eines Gleitens gegen einen axial inneren Rand (41) des oberen Randes (40) anliegt.

10. Scheibenbremse (1) nach einem der Ansprüche 6 bis 9, wobei der Kontakteil (32) der Feder (22) eine axiale Kraft in einer Richtung weg von der Bremsscheibe (3) auf den Reibbelag (11) überträgt und der Befestigungsabschnitt (24) der Feder (22) eine axial elastische Kraft in einer Richtung, welche sich der Scheibenbremse (3) annähert, auf die Seitenwand (5) des Sattels (2) ausübt.

11. Scheibenbremse (1) nach einem der Ansprüche von 6 bis 10, wobei:
- die Befestigungsteile (31) für die Federn (22) radial weiter außerhalb der Halterungsstifte (15) und der Kontaktflächen (33) der Reibbeläge (11) gebildet sind,
- die Kontaktteile (32) der Federn (22) und die entsprechenden Kontaktflächen (33) der Reibbeläge (11) bei einem Abstand von einem jeweiligen Halterungsstift (15) positioniert sind, welcher weniger als das Zweifache des Durchmessers des Halterungsstifts (15) an dem Halterungsloch (16) beträgt.

12. Scheibenbremse (1) nach Anspruch 11, wobei die Kontaktflächen (33) und die Kontaktteile (32) fehlausgerichtet sind und in Bezug auf die Halterungslöcher (16) in Richtung einer in Umfangsrichtung zentralen Zone (43) des Reibbelags (11) verlagert sind.

13. Scheibenbremse (1) nach einem der Ansprüche 11 und 12, wobei die Halterungslöcher (16) in den Endteilen (17) gebildet sind, und die Endteile (17) jeweils eine radiale Erstreckung aufweisen, welche entweder gleich wie oder weniger als zwei Drittel oder entweder gleich wie oder weniger als die Hälfte der gesamten radialen Erstreckung des Reibbelags (11) ist und eine Umfangserstreckung aufweisen, welche kleiner als entweder ein Viertel oder ein Fünftel der gesamten Umfangserstreckung des Reibbelags (11) ist.

14. Scheibenbremse (1) nach einem der Ansprüche 6 bis 13, wenn von Anspruch 4 abhängig, wobei das mit einem Gewinde versehene Loch (49) in einer Anlage-Nische (50) gebildet ist, welche den Befestigungsabschnitt (24) der Feder (22) aufnimmt, um Rotationen der Feder (22) um die Befestigungsschraube (38) zu verhindern, und wobei ein Klemmeingriff zwischen der Anlage-Nische (50), dem Befestigungsabschnitt (24) und einem Kopf der Befestigungsschraube (38) die weiteren Rotationen und Translationen des Befestigungssitzes (30) in Bezug auf den Sattel (2) verhindern.

15. Scheibenbremse (1) nach Anspruch 14, wobei:
- die Befestigungsteile (31) an einer oder mehreren radial äußeren Öffnungen (7, 9, 10) des Sattels (2) gebildet sind,
- der Befestigungsabschnitt (24) der Feder (22) von der radial äußeren Seite (47) des Sattels (2) in Richtung einer radial inneren Seite (46) davon in der Anlage-Nische (50) anliegt,
- die Befestigungsschraube (38) in das mit einem Gewinde versehene Loch (49) eingesetzt und von der radial äußeren Seite (47) durch die radial äußeren Öffnungen (9, 10) zugänglich sein kann.

## Revendications

1. Ressort (22) pour plaquettes de frein (11) associable à un étrier (2) d'un frein à disque (1) pour solliciter élastiquement les plaquettes de frein (11) à l'écart d'un disque de frein (3) du frein à disque (1), ledit ressort (22) comprenant une plaque allongée (27) pliée de manière à former :
- un tronçon de fixation (24),
- un tronçon d'appui (25), à l'opposé du tronçon de fixation (24), et
- un tronçon de retour (26) formé entre le tronçon de fixation (24) et le tronçon d'appui (25),
dans lequel le tronçon de retour (26) s'étend depuis une région de rétrécissement (29), dans laquelle le tronçon de fixation (24) et le tronçon d'appui (25) sont localement rapprochés l'un de l'autre au moins en partie, jusqu'à une région apicale supérieure (28) du ressort (22),
**caractérisé en ce que** le tronçon de fixation (24) forme un siège de fixation (30) pour une fixation par serrage du ressort (22) à une partie de fixation (31) correspondante de l'étrier (2),
dans lequel le tronçon d'appui (25) forme :
- une partie de contact en forme de plaque (32) pour mettre le ressort (22) librement en butée contre une surface de contact (33) correspondante de la plaquette de frein (11), et
- une partie intermédiaire en forme de plaque (34), s'étendant entre la région de rétrécissement (29) et la partie de contact (32),
- un bord de pliage (35) formé entre la partie de contact (32) et la partie intermédiaire (34),
dans lequel la partie de contact (32) est pliée par rapport à la partie intermédiaire (34) de sorte que, lorsque le ressort (22) n'est pas déformé :
- la partie intermédiaire (34) s'étend, à partir de la région de rétrécissement (29), d'une manière divergente par rapport au tronçon de fixation (24) avec un premier angle de divergence (36), et
- la partie de contact en forme de plaque (32) s'étend, à partir du bord de pliage (35), d'une manière divergente par rapport au tronçon de fixation (24) avec un second angle de divergence (37),
- ledit premier angle de divergence (36) et ledit second angle de divergence (37) étant de taille différente, et
- le bord de pliage (35) fait saillie dans la même direction d'extension que la partie de fixation (31).

2. Ressort (22) selon la revendication 1, dans lequel le tronçon de retour (26) s'étend depuis la région de rétrécissement (29) sous la forme d'une boucle élargie par rapport à la région de rétrécissement (29) et la partie de contact (32) présente une longueur (L32) inférieure à une longueur (L34) de la partie intermédiaire (34).

3. Ressort (22) selon la revendication 1, dans lequel la partie intermédiaire (34) s'étend, à partir de la région de rétrécissement (29), d'une manière divergente par rapport au tronçon de fixation (24), dans lequel ledit premier angle de divergence (36) présente une largeur inférieure à celle dudit second angle de divergence (37).

4. Ressort (22) selon la revendication 1, dans lequel la partie intermédiaire (34) s'étend, à partir de la région de rétrécissement (29), d'une manière divergente par rapport au tronçon de fixation (24) avec un premier angle de divergence aigu (36), et
- la partie de contact en forme de plaque (32) s'étend, à partir du bord de pliage (35), d'une manière divergente par rapport au tronçon de fixation (24) avec un second angle de divergence obtus (37).

5. Ressort (22) selon l'une quelconque des revendications précédentes, dans lequel le siège de fixation (30) comprend un trou traversant (48) apte à recevoir une vis de fixation (38) qui peut être vissée dans un trou fileté (49) de la partie de fixation (31).

6. Frein à disque (1) comprenant :
- un étrier (2) avec deux parois latérales (5) agencées des deux côtés d'un plan de disque (23) et formant des sièges de plaquettes (14), dans lequel les deux parois latérales (5) sont reliées l'une à l'autre par des ponts d'extrémité (6) qui délimitent une ouverture centrale (7),
- une paire de plaquettes de frein (11) agencées dans lesdits sièges de plaquettes (14) et comportant une plaque de support (12) portant une garniture de friction (13) et formant des trous de support (16),
- une ou plusieurs broches de support (15) faisant saillie depuis les parois latérales (5) et insérées dans les trous de support (16) pour supporter les plaquettes de frein (11) ;
- un ou plusieurs ressorts (22) selon l'une quelconque des revendications précédentes ;
dans lequel le ressort (22) est fixé dans le frein à disque (1) avec :
- le tronçon de retour (26) orienté vers un côté radialement extérieur (47) de l'étrier (2), et
- le tronçon d'appui (25) faisant saillie vers un côté radialement intérieur (46) de l'étrier (2), et
- le tronçon de fixation (24) s'étendant dans une direction transversale au plan (23) du disque de frein (3).

7. Frein à disque (1) selon la revendication 6, dans lequel les plaquettes de frein (11) forment deux parties d'extrémité latérales (17) s'étendant dans une région radialement intérieure de la plaquette de frein (11), lesdites parties d'extrémité latérales (17) formant un bord supérieur (40) positionné dans une région radialement centrale de la plaquette de frein (11) présentant une extension radiale qui est inférieure à un tiers de l'extension radiale totale de la plaquette de frein (11), dans lequel lesdites parties de contact (32) des ressorts (22) appuient contre les bords supérieurs (40) desdites parties d'extrémité latérales des plaquettes de frein (11).

8. Frein à disque (1) selon la revendication 6 ou 7, dans lequel le tronçon de fixation (24) du ressort (22) est verrouillé à la paroi latérale (5) sur un côté arrière de la plaquette de frein (11) orientée à l'écart du disque de frein (3) et la partie de contact (32) du ressort (22) vient en butée sur un côté radialement extérieur dans une direction radialement intérieure et dans une direction axialement extérieure contre le bord supérieur (40) de la partie d'extrémité latérale (17) de la plaquette de frein (11).

9. Frein à disque (1) selon la revendication 8, dans lequel la partie de contact (32) du ressort (11) s'étend d'une manière inclinée depuis le dessus de la partie d'extrémité latérale (17) axialement vers le disque de frein (3) et radialement vers le côté radialement intérieur (46) de l'étrier (2) et appuie en contact libre et avec la possibilité de coulisser contre un bord axialement intérieur (41) du bord supérieur (40).

10. Frein à disque (1) selon l'une quelconque des revendications 6 à 9, dans lequel la partie de contact (32) du ressort (22) transmet à la plaquette de frein (11) une force axiale dans une direction à l'écart du disque de frein (3) et le tronçon de fixation (24) du ressort (22) applique à la paroi latérale (5) de l'étrier (2) une force élastique axiale dans une direction de rapprochement du frein à disque (3).

11. Frein à disque (1) selon l'une quelconque des revendications 6 à 10, dans lequel :
- les parties de fixation (31) pour les ressorts (22) sont formées radialement plus à l'extérieur des broches de support (15) et des surfaces de contact (33) des plaquettes de frein (11),
- les parties de contact (32) des ressorts (22) et les surfaces de contact (33) correspondantes des plaquettes de frein (11) sont positionnées à une distance d'une broche de support (15) respective qui est inférieure à deux fois le diamètre de la broche de support (15) au niveau du trou de support (16).

12. Frein à disque (1) selon la revendication 11, dans lequel les surfaces de contact (33) et les parties de contact (32) sont désalignées et déplacées par rapport aux trous de support (16) vers une zone circonférentiellement centrale (43) de la plaquette de frein (11).

13. Frein à disque (1) selon la revendication 11 ou 12, dans lequel les trous de support (16) sont formés dans lesdites parties d'extrémité (17), et lesdites parties d'extrémité (17) présentent chacune une extension radiale inférieure ou égale à deux tiers, ou inférieure ou égale à la moitié de l'extension radiale totale de la plaquette de frein (11) et une extension circonférentielle inférieure à un quart ou à un cinquième de l'extension circonférentielle totale de la plaquette de frein (11).

14. Frein à disque (1) selon l'une des revendications 6 à 13 dépendant de la revendication 4, dans lequel le trou fileté (49) est formé dans une niche d'appui (50) qui reçoit le tronçon de fixation (24) du ressort (22) de manière à interdire toute rotation du ressort (22) autour de la vis de fixation (38) et dans lequel un engagement par serrage entre la niche d'appui (50), le tronçon de fixation (24) et une tête de la vis de fixation (38) interdit toute rotation supplémentaire et toute translation supplémentaire du siège de fixation (30) par rapport à l'étrier (2).

15. Frein à disque (1) selon la revendication 14, dans lequel :
- les parties de fixation (31) sont formées à une ou plusieurs ouvertures radialement extérieures (7, 9, 10) de l'étrier (2),
- le tronçon de fixation (24) du ressort (22) appuie dans la niche d'appui (50) depuis le côté radialement extérieur (47) de l'étrier (2) vers un côté radialement intérieur (46) de celui-ci,
- la vis de fixation (38) peut être insérée dans le trou fileté (49) et accédée depuis le côté radialement extérieur (47) à travers lesdites ouvertures radialement extérieures (9, 10).
